# EUROPÄISCHE PATENTANMELDUNG

(11) **EP 1 918 659 A2**
(43) Veröffentlichungstag der Anmeldung: **07.05.2008**
(21) Anmeldenummer: 07020492.0
(22) Anmeldetag: 19.10.2007
(51) Int. Cl.: F24H 1/43, F24H 8/00

(54) **Wärmetauscher**

(30) Priorität: 23.10.2006 DE 202006016339 U
(71) Anmelder: Goebel, Peter, 34497 Korbach (DE)
(72) Erfinder: Goebel, Peter, 34497 Korbach (DE)
(74) Vertreter: Buchhold, Jürgen

(57) **Zusammenfassung**

Die Erfindung betrifft einen Wärmetauscher (10) für die Übertragung von Wärme von einem ersten (äußeren) Medium auf ein zweites (inneres) Medium, mit einem Gehäuse (20) und mit einer darin angeordneten wendelförmigen Rohranordnung (30), die von wenigstens einem Rohr (31) gebildet wird, das umfangsseitig mit Rippen (40) versehen ist, wobei das erste Medium innerhalb des Gehäuses (20) um das Rohr (31) herum und das zweite Medium innerhalb des Rohres (31) geführt ist. Um eine kompakte Bauweise bei gleichzeitig optimierter Wärmeübertragung zu erreichen, und um hohe thermische Belastungen des Rohrkörpers und der Rippen (40) zu vermeiden, ist die wendelförmige Rohranordnung (30), an deren Außenumfang und/oder Innenumfang zumindest abschnittsweise wenigstens ein Leitblech (50) angeordnet ist, in einen Primärabschnitt (P) und einen Sekundärabschnitt (S) unterteilt, wobei der Primärabschnitt (P) und der Sekundärabschnitt (S) eine gemeinsame Mittelachse (A) aufweisen. Weiterhin weist jede Rippe (40) entlang je einer Linie (L), welche radial zur Achse (A) und/oder parallel zur Strömungsrichtung (R) des äußeren Mediums verläuft, aus der Rippenebene heraus wenigstens zwei abgekantete Segmente (42) auf.

## Beschreibung

Die Erfindung betrifft einen Wärmetauscher gemäß dem Oberbegriff von Anspruch 1.

Wärmetauscher oder Wärmeaustauscher werden in unterschiedlichen Bereichen eingesetzt und damit in unterschiedlichen Medien erwärmt bzw. gekühlt. Bei den Medien handelt es sich auf der Außenseite meist um gasförmige Medien, die ihren Energiegehalt über ein Wärmetauscherelement - beispielsweise ein Rohrregister oder eine Rippenrohrwendel - an das auf der Innenseite geführte, innere Medium abgeben, Hierbei handelt es sich je nach Anwendungsfall - meist um ein flüssiges Medium, z.B. um Brauchwasser, Heizungswasser oder Thermoöl.

EP 1 439 354 A1 offenbart einen Wärmeaustauscher für einen Warmwasserbereiter, der mittels eines Gasbrenners temperiertes Brauchwasser erzeugt. Letzteres wird in einem wendelförmig angeordneten Rohr geführt, das umfangsseitig mit Rippen versehen und in zwei räumlich getrennte Abschnitte unterteilt ist. Der Gasbrenner ist horizontal in einem Gehäuse angeordnet und von einem Primärabschnitt des Rohres umschlossen. Ein Sekundärabschnitt des Rohres liegt vertikal zum Primärabschnitt in einem Kanal mit kreisringförmigem Querschnitt, der von einem vertikalen Gehäuseabschnitt und einem Verdrängungskörper begrenzt wird.

Die Rippen des Rohres sind derart ausgebildet, dass zwei in Richtung der Kondensatableitung weisende segmentartige Umfangsbereiche jeder Rippe entlang schräg und/oder parallel zur Strömungsrichtung des Verbrennungsgases verlaufender Knicklinien um etwa 90" aus der Rippenebene heraus abgekantet sind. Durch diese Gestaltung wird erreicht, dass das Verbrennungsgas das Rohr relativ eng umströmt. Gleichzeitig entsteht im Bereich der zueinander V-förmig liegenden Abkantungen eine erhöhte Strömungsgeschwindigkeit, wodurch im Sekundärabschnitt entstehendes Kondensat mitgerissen und einer Kondensatableitung zugeführt wird.

Ein wesentlicher Nachteil derartiger Rippenrohrwärmetauscher liegt jedoch darin, dass der Platzbedarf relativ groß ist und dass der Wärmeübergang von dem äußeren auf das innere Medium weiterhin nicht optimal ist. Der Aufbau ist aufwendig und kompliziert; die Herstellkosten insgesamt hoch. Ein weiteres Problem besteht darin, dass im Bereich des Gasbrenners die Wärmeübertragung nicht nur durch Konvektion stattfindet. Es treten vielmehr auch Gasstrahlung und Festkörperstrahlung auf. Dadurch entstehen hohe thermische Belastungen des Rohrkörpers und der Rippen, wobei es in bestimmten Bereichen innerhalb des Wärmetauscherelements zur Dampfblasenbildung kommen kann. Die Werkstoffe des Rippenrohres werden stark belastet, was bis zur Zerstörung des Wärmetauschers führen kann.

Ziel der Erfindung ist es, diese und weitere Nachteile des Standes der Technik zu vermeiden und einen Wärmetauscher zu schaffen, der mit einfachen Mitteln kompakt aufgebaut ist und einen stets optimalen Wärmeübergang von einem äußeren zu einem inneren Medium gewährleistet. Der Wärmetauscher soll zudem universell einsetzbar und einfach herstellbar sein.

Hauptmerkmale der Erfindung sind im kennzeichnenden Teil von Anspruch 1 angegeben. Ausgestaltungen sind Gegenstand der Ansprüche 2 bis 27.

Bei einem Wärmetauscher für die Übertragung von Wärme von einem äußeren Medium auf ein inneres Medium, mit einem Gehäuse und mit einer darin angeordneten wendelförmigen Rohranordnung, die von wenigstens einem Rohr gebildet wird, das umfangsseitig mit Rippen versehen ist, wobei das äußere Medium innerhalb des Gehäuses um das Rohr herum und das innere Medium innerhalb des Rohres geführt ist, sieht die Erfindung vor, dass die Rohranordnung in einen Primärabschnitt und einen Sekundärabschnitt unterteilt ist, wobei der Primärabschnitt und der Sekundärabschnitt eine gemeinsame Mittelachse aufweisen, dass wenigstens zwei Segmente jeder Rippe entlang je einer Linie aus der Rippenebene heraus abgekantet sind, wobei die Linien radial zur Achse und/oder parallel zur Strömungsrichtung des äußeren Mediums verlaufen, und dass am Außenumfang und/oder am Innenumfang der wendelförmigen Rohranordnung zumindest abschnittsweise wenigstens ein Leitblech angeordnet ist.

Die Anordnung der Abschnitte der wendelförmigen Rohranordnung auf einer gemeinsamen Mittelachse ermöglicht einen äußerst kompakten und kostengünstigen Aufbau des Wärmetauschers. Zudem lassen sich die Rippenrohre aufgrund der abgekanteten Rippensegmente sehr dicht entlang der Mittelachse anordnen, was die Abmessungen des Wärmetauschers weiter reduziert, ohne jedoch die Kontaktfläche des äußeren Mediums mit der Rohranordnung zu verringern. Die Rippenrohrwendel sorgt vielmehr für einen stets guten Wärmeübergang von dem äußeren Medium - beispielsweise einem Verbrennungsgas - auf das in der Rohranordnung geführte innere Medium, beispielsweise Heiz-oder Warmwasser. Die Aufteilung der Rohranordnung in einen Primär- und einen Sekundärabschnitt und damit die Aufteilung des Wärmetauschers in zwei verschiedene Wärmeübertragungszonen fördert die Effizienz der Kondensation der Abgase an der Rohranordnung. Der Wirkungsgrad des Wärmetauschers ist sehr hoch. Hinzu kommen deutlich geringere Druckverluste sowohl auf der Abgas- als auch auf der Wasserseite, was einen sehr niedrigen Energieverbrauch, insbesondere auch bei den so genannten Hilfskomponenten (z.B. Umwälzpumpe, Gebläse u.dgl.) gewährleistet. Die am Außen- und/oder Innenumfang angeordneten Leitbleche sorgen für eine stets optimale Führung des äußeren Mediums um das Rippenrohr herum. Dadurch wird der Wärmeübergang noch weiter gesteigert, insbesondere die Gewinnung von Kondensationswärme pro Wärmetauscherfläche.

Eine andere Ausführungsform der Erfindung sieht vor, dass der Primärabschnitt und der Sekundärabschnitt der Rohranordnung entlang der Mittelachse hintereinander angeordnet sind, wobei zwischen dem Primärabschnitt und dem Sekundärabschnitt eine Wandung angeordnet ist. Letztere trennt die Brennkammer - wo gewöhnlich ein Gas- oder Ölbrenner angeordnet ist - vom Kondensationsbereich. Sie sorgt ferner für eine gezielte Führung des äußeren Mediums, welches stets an der gesamten Rohrwendel entlang geführt wird.

Konstruktiv ist es günstig, wenn das Rohr durch die Wandung hindurchgeführt ist. Um Fehlströmungen zu vermeiden, dichtet man das Rohr zudem gegenüber der Wandung ab. Je nach Einsatzzweck des Wärmetauschers kann es zweckmäßig sein, die Rohranordnung von zwei parallel nebeneinander angeordneten Rohren zu bilden.

Eine andere Ausführungsform der Erfindung sieht vor, dass der Primärabschnitt und der Sekundärabschnitt der Rohranordnung koaxial zueinander und zur Achse angeordnet sind, wobei der Sekundärabschnitt den Primärabschnitt umschließt. Dadurch erreicht man eine besonders kompakte Bauform des Wärmetauschers, weil sich die Länge der Rohranordnung auf ein Minimum reduzieren lässt, Ferner liegen die Anschlüsse des Rippenrohres für den Zu- und Ablauf auf einer Seite des Gehäuses, wodurch sich der Platzbedarf weiter reduziert. Der Wärmetauscher lässt sich selbst bei beengten Platzverhältnissen rasch und bequem montieren.

Dazu trägt auch bei, wenn die Rohrwindungen des Primärabschnitts und die Rohrwindungen des Sekundärabschnitts in Richtung der Achse versetzt angeordnet sind. Die Rohrwindungen liegen dadurch Lücke auf Lücke, d.h. Sie lassen sich äußerst dicht packen, was sowohl auf den Platzbedarf verringert als auch die Strömungsverhältnisse verbessert.

Je nach Einsatzzweck des Wärmetauschers kann es auch hier zweckmäßig sein, den Primärabschnitt und den Sekundärabschnitt der Rohranordnung von zwei separaten Rohren zu bilden.

Die Abmessungen des Wärmetauschers lassen sich weiter reduzieren, wenn man die einzelnen Rohrwindungen der Rohranordnung so anordnet, dass die Rippenrohre mit ihren abgeknickten Segmenten aneinander anliegen.

Konstruktiv ist es günstig, wenn das Gehäuse einen zylinderförmigen Korpus aufweist, der stirnseitig von je einem Deckel verschlossen ist. Das Rohr der Rohranordnung ist - je nach Ausführungsform der Erfindung - durch wenigstens einen Deckel hindurchgeführt, wobei das Rohr, insbesondere die Rohrenden im Bereich des Deckels keine Rippen aufweist. Das Rohr kann ferner von dem Deckel in seiner Lage fixiert werden was sich günstig auf die Stabilität des Wärmetauschers auswirkt. Um das Austreten des äußeren Mediums aus dem Gehäuse zu vermeiden, ist das Rohr gegenüber dem Deckel abgedichtet, vorzugsweise mit einer elastischen und hitzebeständigen Dichtung bzw. einer Dichtmasse.

Um den Wirkungsgrad des Wärmetauschers weiter zu erhöhen, sieht die Erfindung ergänzend vor, dass jeder Deckel wenigstens eine Isolationsschicht trägt, wobei das Rohr zumindest abschnittsweise in der Isolationsschicht eingebettet ist.

Montage und Wartung werden vereinfacht, wenn in dem Deckel des Gehäuses eine Öffnung zur Aufnahme eines Brenners ausgebildet ist. Dieser lässt sich dadurch jederzeit rasch ein- und ausbauen, insbesondere zu Wartungszwecken. Mit Vorteil weist die Öffnung dabei eine trichterförmige oder kegelförmige Wandung aufweist, so dass der Brenner beim Einsetzen in den Deckel automatisch zentriert wird. Zugleich erzielt man eine gute Abdichtung.

Damit das äußere Medium ungehindert ausströmen kann, ist der zylinderförmige Korpus mit einem Auslass versehen. Für das Ablassen des Kondenswassers ist im zylinderförmigen Korpus ein Kondensataustritt vorgesehen. Auslass und Kondensataustritt liegen sind bevorzugt gegenüberliegend angeordnet, so dass die Verbrennungsgase nach oben abziehen können und das Kondensat mit Hilfe der Schwerkraft nach unten ablaufen kann.

Die wendelförmige Rohranordnung liegt gemäß einer bevorzugten Ausführungsform exzentrisch im Gehäuse bzw. im Korpus. Dadurch erzielt man eine äußerst effektive Abgasführung. Die Spaltweite zwischen der Rohranordnung und der Oberseite des Gehäuses ist dabei größer als die Spaltweite zwischen der Rohranordnung und der Unterseite des Gehäuses, beispielsweise um den Faktor 1 bis 2, vorzugsweise um den Faktor 1,5.

Um den Wärmetauscher individuell an die unterschiedlichen Einsatzzwecke anpassen zu können, sieht die Erfindung weiter vor, dass die Anzahl der Rippen auf dem Rohr im Sekundärabschnitt größer ist als die Anzahl der Rippen auf dem Rohr im Primärabschnitt. Dadurch erreicht man, dass nur eine bestimmte Wärmemenge von dem Primärabschnitt auf das innere Medium übertragen wird, beispielsweise nur 35 % bis 40 %. Ergänzend oder alternativ ist der Abstand der Rippen in Längsausdehnung des Rohrs im Sekundärabschnitt kleiner als im Primärabschnitt. Man kann aber auch die von den Rippen gebildete Kontaktfläche mit dem äußeren Medium im Sekundärabschnitt größer wählen als im Primärabschnitt. Eine durch diese Maßnahmen optimierte Rippengeometrie unterstützt die kompakte und leistungsstarke Gestaltung des Wärmetauschers, der einfach aufgebaut und kostengünstig herstellbar ist.

Das am Außenumfang und/oder am Innenumfang der wendelförmigen Rohranordnung vorgesehene Leitblech ist bevorzugt wendelförmig ausgebildet. Es bedeckt zumindest abschnittsweise zwei benachbarte Rohre, so dass das äußere Medium beim Durchströmen durch die Rohranordnung intensiv mit dem Wärmetauscherrohr und dessen Rippen in Kontakt kommt. Dabei ist es von Vorteil, wenn das Leitblech im Querschnitt V-förmig ausgebildet ist. Es kann dann nahezu formschlüssig zwischen den jeweils benachbarten Rohrwindungen auf die Aussenkanten der Rippen aufgelegt werden.

Durch das Leitblech wird der Wärmeübertragungspfad um das Rippenrohr deutlich verlängert. Gleichzeitig ist jedoch der Strömungsquerschnitt zwischen den Rippen und dem Leitblech verkleinert, was zu einer erhöhten Strömungsgeschwindigkeit des äußeren Mediums führt. Dieses treibt mithin das auf der Rohrwendel entstehende Kondensat nach außen, wo es über die Leitbleche sauber nach unten ablaufen und über den Kondensataustritt entsorgt werden kann. Das Leitblech sorgt mithin nicht nur für eine gezielte Abgasführung. Es leitet zudem das Kondensat gezielt ab.

Unabhängig von alledem lässt sich durch die Anordnung des Leitblechs in Kombination mit dem Rippenrohr nach außen hin ein gezielter Druckverlust aufbauen. Dadurch entsteht - bei verbessertem Wärmeübergang - innerhalb des Wärmetauschers ein Gegendruck, der eine stets einwandfreie Zündung sowie einen stets zuverlässigen Betrieb des Brenners gewährleistet - und dies über den gesamten Modulationsbereich des Brenners. Der erfindungsgemäße Wärmetauscher besitzt damit nicht bloß eine kompakte, optimierte Baugröße. Auch die Brennkammer ist optimal gestaltet, was sich günstig auf den Wirkungsgrad auswirkt.

Bevorzug ist das Leitblech aus einem federelastischen Material gefertigt, was sich kostengünstig realisieren lässt. Ferner ist die Montage äußerst einfach, weil sich das Band nahezu selbstständig um die Rohranordnung herum legt. Es reicht daher aus, wenn das Leitblech in seinem Anfangsbereich und seinem Endbereich jeweils an den Rippen fixiert ist, beispielsweise durch Schweißen oder Kleben. Darüber hinaus passt sich das Leitblech stets an die Außenabmessungen der Rohranordnung an, die sich in Folge der Wärmeausdehnung ändern können.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische, teilweise aufgeschnittene Ansicht eines erfindungsgemäßen Wärmetauschers.
- Fig. 2: eine perspektivische, Teilansicht der Rohranordnung des Wärmetauschers mit im Deckel eingesetztem Brenner und Gebläse,
- Fig. 3: eine Schnittansicht durch ein Rippenrohr,
- Fig. 4: eine Ausschnittsvergrößerung des Rippenrohrs von Fig. 4,
- Fig. 5: eine Stirnansicht eines Rippenrohrs,
- Fig. 6: eine Teil-Schnittansicht der Rohranordnung des Wärmetauschers von Fig. 1,
- Fig.7: eine Ausschnittsvergrößerung der Rohranordnung des Wärmetauschers von Fig. 6 und
- Fig. 8: eine andere Ausführungsform eines erfindungsgemäßen Wärmetauschers, teilweise im Schnitt.

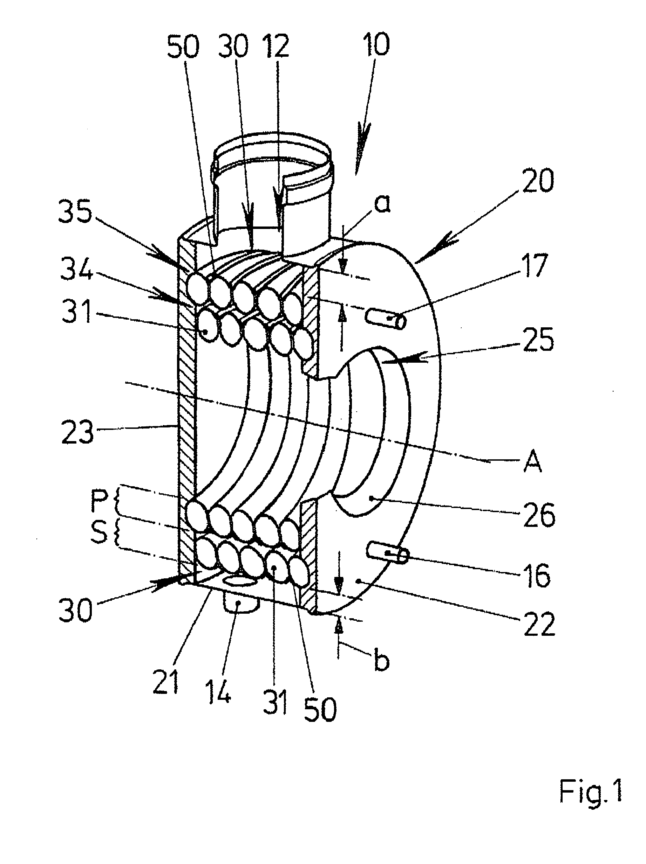

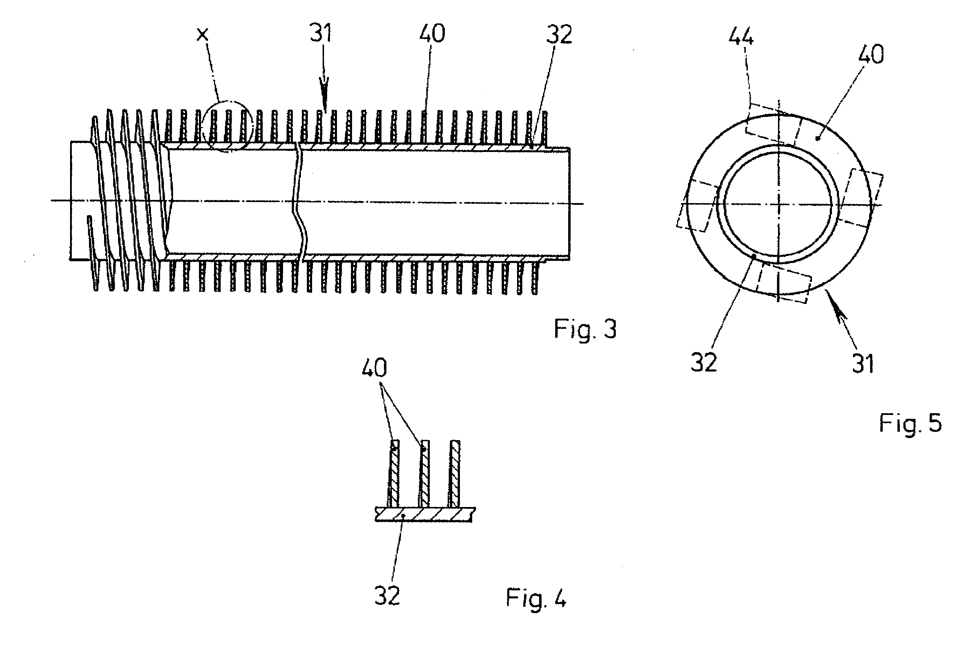

Der in Fig. 1 allgemein mit 10 bezeichnete Wärmetauscher ist als Brennwert- bzw. Abgaswärmetauscher für den Einsatz in einer Heizungsanlage - insbesondere einer Gas-Brennwert-Anlage - konzipiert, um Wärmeenergie von einem äußeren Medium (heißes Abgas) auf ein inneres Medium (Heiz- oder Brauchwasser) zu übertragen. Er hat ein Gehäuse 20 mit einem zylinderförmigen Korpus 21, der stirnseitig mit je einem Deckel 22, 23 dicht verschlossen ist. Im Gehäuse 20 befindet sich ein Wärmetauscherelement 30 in Form einer wendelförmigen Rohranordnung. Letztere wird von einem Rohr 31 gebildet, das - wie Fig. 3 näher zeigt - umfangsseitig Rippen 40 trägt und das stirnseitig durch den Deckel 22 hindurch aus dem Gehäuse 20 herausgeführt ist. Dort bilden die (nicht näher bezeichneten) Rohrenden einen Anschluss 16 für den Wasservorlauf sowie einen Anschluss 17 für den Wasserrücklauf.

In dem rechts in Fig. 1 dargestellten Deckel 22 ist zur Aufnahme eines Gasbrenners 18 zentrisch eine Öffnung 25 ausgebildet, die mit einer trichterförmigen oder kegelförmigen Wandung 26 versehen ist. Der Brenner 18 besitzt eine (nicht gezeigte) gegengleiche Wandung und wird dadurch beim Einsetzen automatisch zentriert und ausgerichtet; die Wandung 26 dient zugleich als Dichtfläche. Die Festlegung des Brenners 18 am Gehäusedeckel 22 erfolgt bevorzugt mittels (nicht dargestellter) Schnellverschlüsse oder Klammern, so dass man den Brenner 18 - beispielsweise zu Wartungszwecken - zusammen mit seinem Gebläse 19 rasch abnehmen kann.

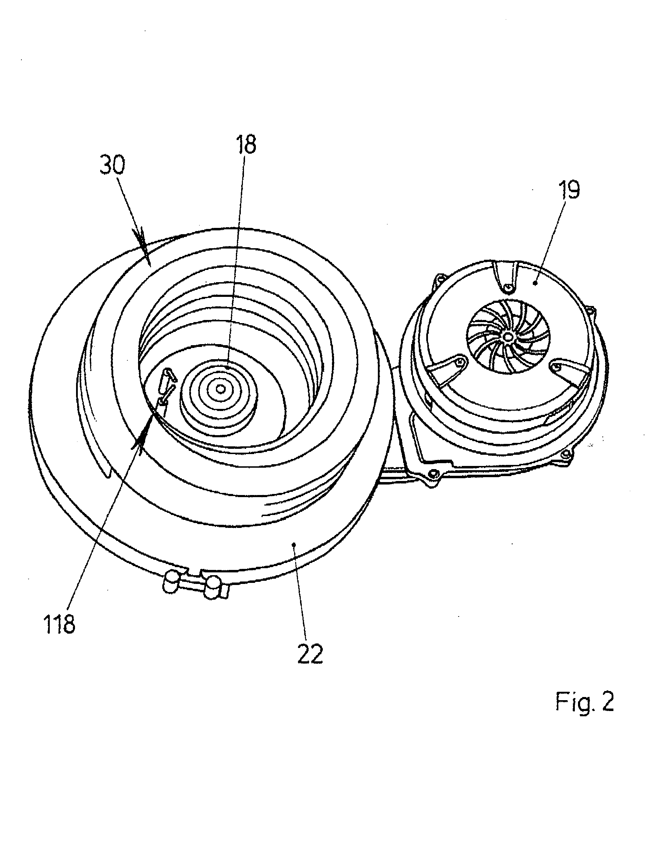

Man erkennt in Fig. 2, dass der Brenner 18 in die Rohranordnung 30 hineinragt und parallel zu dessen Mittelachse A liegt. Die Abgase des Brenners 18 werden dadurch innerhalb des Gehäuses 20 radial nach außen und um die Rohranordnung 30 herum geführt, während das Heiz- oder Brauchwasser innerhalb der Rohranordnung 30 durch die Rohrschlange 31 fließt. Das Gebläse 19 versorgt den Brenner 18 mit der notwendigen Verbrennungsluft. Seitlich neben dem Brenner 18 sind zwei Hochfrequenzzünder 118 zum Zünden des Brenners 18 vorgesehen.

Der im wesentlichen zylindrische Gehäusekorpus 21 ist umfangsseitig mit einem Auslass 12 für das Abgas versehen, der über eine (nicht dargestellte) Rohrleitung an einen Kaminabzug angeschlossen wird. Fig. 1 zeigt den Wärmetauscher in seiner Montagestellung. Der Auslass 12 befindet sich mithin auf der Oberseite des Gehäuses 20. Diametral gegenüber, d.h. auf der Unterseite des Gehäuses 20, ist im zylinderförmigen Korpus 21 ein Kondensataustritt 14 vorgesehen, der im Wärmetauscher entstehendes Kondensat nach unten ableitet. Der Kondensataustritt 14 mündet zweckmäßig in einer (nicht gezeigten) Abflussleitung. Je nach Einbausituation für den Wärmetauscher 10 können der Auslass 12 und der Austritt 14 auch an einer anderen Stelle am Gehäuse 20 ausgebildet sein. Das gleiche gilt für die Wasseranschlüsse 16, 17.

Das in Fig, 3 näher gezeigte Rohr 31 ist ein lasergeschweißtes Rippenrohr. Es besteht aus einem Grundrohr 32, das bevorzugt aus Edelstahl gefertigt ist. Für die umfangsseitig aufgesetzten Rippen 40 verwendet man zweckmäßig ein Material mit einem höheren Wärmeleitwert, beispielsweise Edelstahl, Kupfer, Aluminium o.dgl., so dass stets ein optimaler Wärmeübergang von dem äußeren Medium auf das innere Medium erreicht wird. Für einen Brennwert-Wärmetauscher kann man als Rippenmaterial auch ein zunderbeständiges Stahlband mit sehr hohem Wärmeleitwert verwenden, was zeigt, dass der erfindungsgemäße Wärmetauscher 10 vielseitig einsetzbar ist.

Die Herstellung des Rippenrohres 31 ist an sich bekannt. Die Rippen 40 werden von einem bandförmigen Material gebildet, das um das Grundrohr 32 herum gewickelt und dabei mittels eines Lasers verschweißt wird. Dabei stehen die einzelnen Rippen 40 im Wesentlichen senkrecht auf der Grundrohroberfläche (siehe Fig. 4), so dass das Rippenrohr 31 eine insgesamt große Kontaktfläche für das äußere Medium aufweist.

In einem alternativen Herstellverfahren können zwei bis vier Rippenbänder 40 gleichzeitig auf das Grundrohr 32 aufgebracht und mit diesem verschweißt werden. Die Bänder werden hierzu in einer geeigneten Vorrichtung parallel geführt und zeitgleich verschweißt. Anstelle von Flachbändern kann man auch im Querschnitt V-förmige Bänder verwenden.

Eine weitere Variante des Herstellverfahrens sieht vor, dass beim Aufwickeln und Verschweißen des bandförmigen Materials auf dem Grundrohr 32 in regelmäßigen Abständen (nicht näher bezeichnete) Einschnitte in das Bandmaterial vorgenommen werden.

Dabei entstehen - bedingt durch die Eigenspannung im Band - gerade Abschnitte 44, die strömungstechnisch wie Turbulatoren wirken. Diese steigern daher ebenfalls den Wärmeübergang von dem äußeren Medium auf das innere Medium. Gleichzeitig reduziert sich die notwendige Wärmeübertragungsfläche.

Die wendelförmige Rohranordnung 30 weist - wie Fig. 1 zeigt - zwei Wicklungen 34, 35 auf. Die erste innere Wicklung 34 umschließt den Brenner 18, während die zweite äußere Wicklung 35 die erste Wicklung 34 einschließt. Beide Wicklungen 34, 35 werden von dem Rohr 31 gebildet, das vorzugsweise vom Vorlaufanschluss 16 bis zum Rücklaufanschluss 17 durchgehend ausgebildet ist. Durch die koaxiale Anordnung der Wicklungen 34, 35 zur gemeinsamen Achse A wird eine äußerst kompakte Bauform erreicht. Gleichzeitig ist die Rohranordnung 30 in zwei räumlich getrennte Abschnitte unterteilt, nämlich einen Primärabschnitt P und einen Sekundärabschnitt S, wobei der Primärabschnitt P und der Sekundärabschnitt S koaxial zur Mittelachse A angeordnet sind. Diese Aufteilung in zwei verschiedene Wärmeübertragungszanen P, S sorgt nicht nur für eine kompakte Ausbildung des Wärmetauscherelements 30, sie fördert zudem die Effizienz der Wärmeübertragung und die Effizienz der Kondensation der Abgase im Sekundärbereich S des Wärmetauschers 10. Dazu trägt auch die Wasserführung im Rohr 31 bei, die bevorzugt im Gegenstromprinzip erfolgt, d.h. das kalte Wasser im Vorlauf 16 trifft auf das bereits abgekühlte Abgas im Sekundärabschnitt S, während sich der Rücklauf 17 am Ende des Primärabschnitts P befindet.

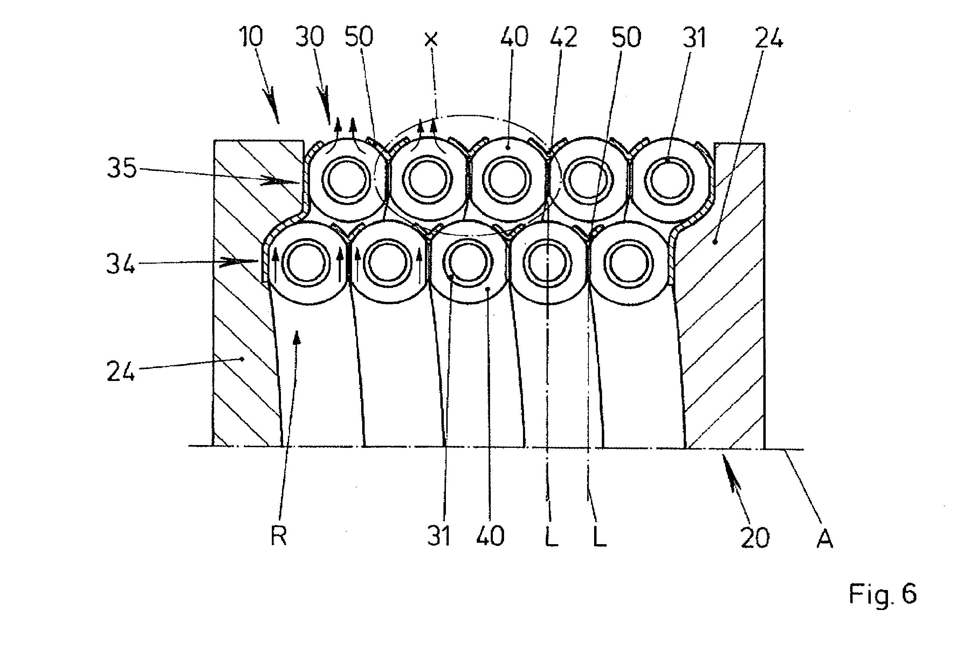

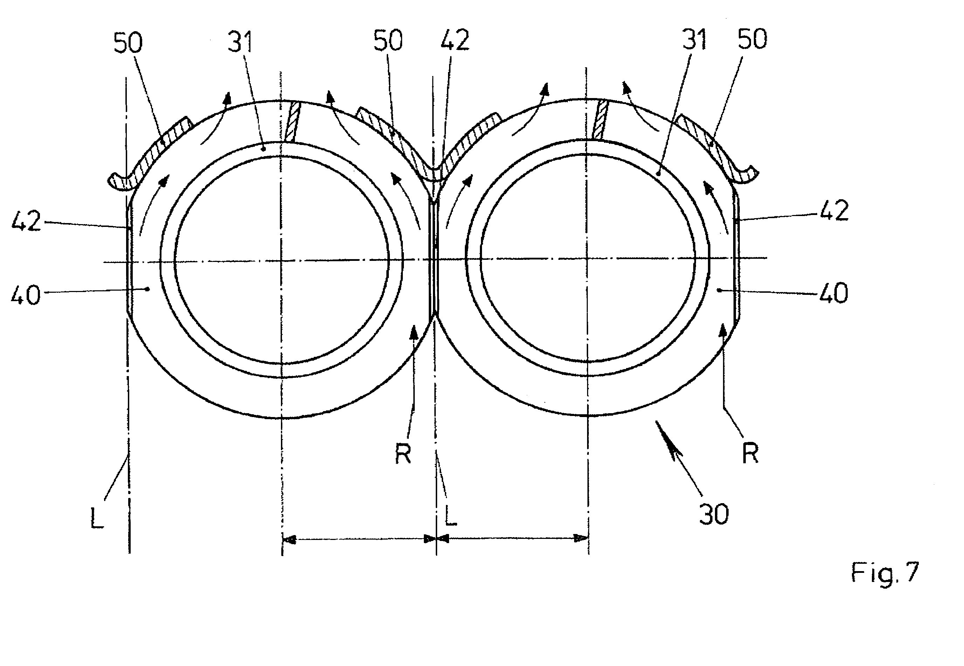

Um die Wärmeübertragung im Wärmetauscher 10 weiter zu verbessern und um zugleich die Abmessungen des Wärmetauscherelements 30 weiter zu reduzieren, sind wenigstens zwei Segmente 42 jeder Rippe 40 entlang je einer Linie L aus der Rippenebene heraus abgekantet, wobei die Linien L radial zur Achse A und/oder parallel zur Strömungsrichtung R des äußeren Mediums verlaufen. Durch diese Abkantungen sind die einzelnen Windungen des Rohres 31 - wie in Fig. 6 und 7 zu sehen - seitlich abgeflacht. Die Rohrwindungen können daher in Richtung der Mittelachse A sehr dicht nebeneinander zusammengeschoben werden und zwar soweit, bis die bevorzugt um 90° abgekanteten Segmente 42 benachbarter Windungen aneinander anliegen. Der Platzbedarf der Wicklungen 34. 35 ist damit äußerst gering. Die Segmente 42 sorgen aufgrund der verengten Strömungsquerschnitte für einen intensiven Kontakt zwischen dem Abgas und dem Rohr 31.
Eine weitere Reduzierung der Abmessungen der Rohranordnung 30 wird erreicht, wenn die Rohrwindungen des Primärabschnitts P und die Rohrwindungen des Sekundärabschnitts S in Richtung der Achse A versetzt angeordnet sind. Gleichzeitig verbessert sich auch dadurch der Kontakt zwischen dem durch die Rohranordnung 30 hindurchgeführten Abgas und dem Rohr 31 bzw. den Rippen 40, was sich günstig auf den Wirkungsgrad des Wärmetauschers 10 auswirkt.

Je nach Einsatz des Wärmetauschers 10 ist es notwendig, die Wärmeübertragung vom heißen Abgas auf das in dem Rohr 31 geführte Wasser zu variieren und an den jeweiligen Bedarf anzupassen. Hierbei ist es zweckmäßig die Anzahl der Rippen 40 auf dem Rohr 31 im Sekundärabschnitt S größer zu wählen als die Anzahl der Rippen 40 auf dem Rohr 31 im Primärabschnitt P. Ergänzend oder alternativ kann man den Abstand der Rippen 40 in Längsausdehnung des Rohrs 31 untereinander unterschiedlich wählen, beispielsweise dass die Abstände im Sekundärabschnitt S kleiner sind als im Primärabschnitt P. Ferner ist vorgesehen, dass die von den Rippen 40 gebildete Kontaktfläche mit dem äußeren Medium im Sekundärabschnitt S größer ist als im Primärabschnitt P. Durch diese Maßnahmen wird erreicht, dass nur eine bestimmte Wärmemenge (z.B. 35 bis 40 %) vom Primärabschnitt P auf das flüssige innere Medium übertragen wird, Die weitere Wärmeübertragung übernimmt dann der Sekundärbereich S, der durch enger liegende oder größere Rippen 40 einen sehr viel intensiveren Kontakt zum äußeren Medium hat.

Um die Abgasführung weiter zu optimieren, ist die wendelförmige Rohranordnung 30 exzentrisch im Gehäuse 20 bzw. im Korpus 21 angeordnet. Die (nicht näher dargestellte) Mittelachse des Brenners 18 liegt mithin gegenüber der Mittelachse der Rohranordnung 30 nach unten versetzt, so dass die Spaltweite a zwischen der äußeren Wicklung 34 und der Oberseite des Gehäuses 20 größer ist als die Spaltweite b zwischen der äußeren Wicklung 34 und der Unterseite des Gehäuses 20. Das Verhältnis zwischen Spaltweite a zu Spaltweite b liegt zwischen 1 und 2, bevorzugt bei 1,5, d.h. die Spaltweite a ist um das 1,5-fache größer als die Spaltweite b.

Wie Fig. 6 und 7 zeigen, ist jeweils zwischen zwei benachbarten Windungen des Rohres 31 am Außenumfang der wendelförmigen Rohranordnung 30 ein Leitblech 50 aus bevorzugt federelastischem Material angeordnet. Es hat einen V-förmigen Querschnitt und ist insgesamt wendelförmig um die gesamte Rohranordnung 30 gewickelt, wobei das Blech 50 jeweils zwei benachbarte Rohrwindungen überdeckt. Es liegt dabei auf den Außenkanten der Rippen 40 auf und ist z.B. in den Endbereichen des Rohres 31 an den Rippen 40 fixiert, beispielsweise durch Schweißen oder Kleben. Weitere Befestigungsmaßnahmen sind nicht erforderlich, insbesondere dann, wenn das federelastische Leitblech 50 enger gewickelt ist als die Windungen 34, 35 der Rohranordnung 30. Das Blech 50 liegt dadurch stets formschlüssig und sicher auf den Kanten der Rippen 40 auf, was die Montage vereinfacht und für einen guten Wärmekontakt sorgt.

Das Leitblech 50 verbessert die Wärmeübertragung sowohl im Primärbereich P als auch im Sekundärbereich S der Wärmetauscherelements 30. Gleichzeitig wird durch das Leitbelch 50 der Strömungsquerschnitt für das Abgas durch die Rohranordnung 30 hindurch weiter verkleinert, so dass im Sekundärbereich S entstehendes Kondensat von dem schneller strömenden Abgas nach außen getrieben wird. Das Kondensat kann an den Kanten des Leitblechs 50 entlang nach unten abfließen und über den Kondensataustritt 14 aus dem Gehäuse 20 abgeführt werden.

An den Innenflächen der Deckel 22, 23 ist jeweils eine mineralisch aufgebaute feuerfeste Isolierung 24 aufgebracht, so dass der Wärmeverlust über das Gehäuse 20 minimal ist. Das Rohr 31 der Rohranordnung 30 ist stirnseitig in die Isolationsschicht 24 eingebettet und mit seinen Enden durch den Deckel 22 hindurchgeführt, In diesem Bereich weist das Rohr 31 bevorzugt keine Rippen 40 auf. Es ist ferner gegenüber dem Deckel abgedichtet, vorzugsweise mit einer elastischen Silikondichtung oder einer anderen hitzebeständigen elastischen Dichtmasse. Damit wird das Rohr 31 von dem Deckel 22 in seiner Lage fixiert.

Die Deckel 22, 23 des Gehäuses 20 und die Rohranordnung 30 bilden ein Sandwich-Anordnung, die in Richtung der Mittelachse A äußerst geringe Abmessungen aufweist. Der gesamte Wärmetauscher 10 lässt sich mithin äußerst kompakt ausbilden bei gleichzeitig hohem Wirkungsgrad. Sämtliche Werkstoffe des Wärmetauschers 10 sind gegenüber den relativ sauren Kondensatstoffen beständig, so dass die gesamte Vorrichtung eine hohe Lebensdauer aufweist.

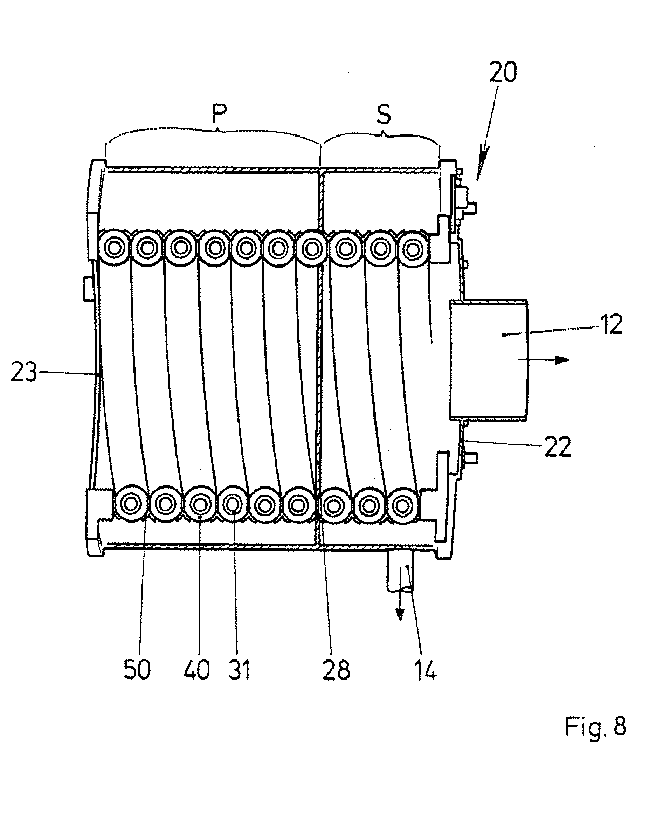

Fig. 8 zeigt eine andere Ausführungsform eines erfindungsgemäßen Wärmetauschers 10. Der Primärabschnitt P und der Sekundärabschnitt S sind hier nicht koaxial, sondern entlang der Mittelachse A hintereinander angeordnet, wobei zwischen dem Primärabschnitt P und dem Sekundärabschnitt S eine Wandung 28 ausgebildet ist, um die Brennkammer vom Kondensationsbereich zu trennen. Das Rohr 31 ist dabei durch die Wandung 28 hindurchgeführt und - ebenso wie die Wandung 28 im Gehäuse 20 abgedichtet, damit das in dem Gehäuse 20 geführte Abgas nicht unmittelbar in den Abgasauslass gelangt, der im Deckel 22 ausgebildet ist. Der Brenner 18 ist im gegenüberliegenden Deckel 23 des Gehäuses 20 eingesetzt, der hierzu mit einer entsprechenden Ausnehmung bzw, Öffnung 25 versehen ist.

Weitere Vorteile des erfindungsgemäßen Wärmetauschers 10 stellen sich wie folgt dar:
■ Der Wärmetauscher 10 ermöglicht aufgrund seiner kompakten Abmessungen und aufgrund seiner besonderen Geometrie die gleichzeitige Modulation von Brenner 18 und Umwälzpumpe, z.B. für einen Modulationsbereich von 35:1.
■ Die durch den Sekundärbereich S geschaffene separate Kondensationszone sorgt für einen optimalen Wärmeübergang und damit für einen außerordentlich hohen Wirkungsgrad.
■ Der Brenner lässt sich in Größe und Leistung deutlich reduzieren. Der Wärmetauscher kann aufgrund seiner kompakten Bauform und seiner besonderen Geometrie stets optimal an den Brenner angepasst werden.
■ Der Brenner und der Wärmetauscher bilden eine kompakte Baueinheit, die einfach zu handhaben und rasch anschließbar ist.
■ Die Abgas- und Wasserführung im Gehäuse 20 bzw. in der Rohranordnung 30 ist äußerst effizient, was sich ebenfalls günstig auf den Wirkungsgrad auswirkt.
■ Sowohl der Brenner 18 als auch die Rohranordnung 30 sind jederzeit rasch und bequem zugänglich. Dies gewährleistet eine gute Wartungsfreundlichkeit des Wärmetauschers 10.
■ Die Leitbleche 50 sorgen für eine gezielte Kondensatführung bis zum tiefsten Punkt am Gehäuse 20, wo das Kondensat einfach abgeführt werden kann.
■ Die Führung des inneren Mediums (Wasser) in der Rohrschlage 30, 31 steigert ebenfalls den Wärmeübergang und reduziert zugleich die Geräuschbildung und damit die Siedegefahr.

Die Erfindung ist nicht auf eine der vorbeschriebenen Ausführungsformen beschränkt, sondern in vielfältiger Weise abwandelbar. So kann man den Primärabschnitt P und den Sekundärabschnitt S der Rohranordnung 30 auch von zwei separaten Rohren 31 bilden, die entweder gemäß der Ausführungsform von Fig. 1 koaxial zur Achse A angeordnet sind oder gemäß der Ausführungsform von Fig. 8 parallel nebeneinander geführt sind. Das Leitblech 50 kann in einer weiteren Ausgestaltung der Erfindung auch am Innenumfang der Rohranordnung 30 angeordnet sein. Der Wärmetauscher 10 kann als Brennwertwärmetauscher oder aber auch als Abgaswärmetauscher eingesetzt werden. Im letztgenannten Fall kann es zweckmäßig sein, das Rohr 31 und/oder die Rippen 40 mit einer Beschichtung, insbesondere einer schmutzabweisenden Beschichtung zu versehen, beispielsweise einer Beschichtung mit dem so genannten Lotusblüteneffekt.

Man erkennt, dass die Erfindung einen Wärmetauscher 10 für die Übertragung von Wärme von einem ersten äußeren Medium auf ein zweites inneres Medium betrifft, mit einem Gehäuse 20 und mit einer darin angeordneten wendelförmigen Rohranordnung 30, die von wenigstens einem Rohr 31 gebildet wird, das umfangsseitig mit Rippen 40 versehen ist, wobei das erste Medium innerhalb des Gehäuses 20 um das Rohr 31 herum und das zweite Medium innerhalb des Rohres 31 geführt ist. Um eine kompakte Bauweise bei gleichzeitig optimierter Wärmeübertragung zu erreichen, und um hohe thermische Belastungen des Rohrkörpers und der Rippen 40 zu vermeiden, ist die wendelförmige Rohranordnung 30, an deren Außenumfang und/oder Innenumfang zumindest abschnittsweise wenigstens ein Leitblech 50 angeordnet ist, in einen Primärabschnitt P und einen Sekundärabschnitt S unterteilt, wobei der Primärabschnitt P und der Sekundärabschnitt S eine gemeinsame Mittelachse A aufweisen. Weiterhin weist jede Rippe 40 entlang je einer Linie L, welche radial zur Achse A und/oder parallel zur Strömungsrichtung R des äußeren Mediums verläuft, aus der Rippenebene heraus wenigstens zwei abgekantete Segmente 42 auf.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

| | | | |
|---|---|---|---|
| a | Spaltweite | 22 | Deckel |
| b | Spaltweite | 23 | Deckel |
| A | Achse | 24 | isolationsschicht |
| L | Knicklinie | 25 | Öffnung (Brenner) |
| P | Primärabschnitt | 26 | Wandung (Öffnung) |
| R | Strömungsrichtung | 28 | Wandung (Trennwand) |
| S | Sekundärabschnitt | 30 | Rohranordnung |
| | | 31 | Rohr |
| 10 | Wärmetauscher | 32 | Grundrohr |
| 12 | Abgasauslass | 34 | erste Wicklung |
| 14 | Kondensataustritt | 35 | zweite Wicklung |
| 16 | Anschluss (Vorlauf) | 40 | Rippe |
| 17 | Anschluss (Rücklauf) | 42 | Segment |
| 18 | Gasbrenner | 44 | Turbulator |
| 19 | Gebläse | 50 | Leitblech |
| 20 | Gehäuse | 118 | Zünder |
| 21 | Korpus | | |

## Patentansprüche

1. Wärmetauscher (10) für die Übertragung von Wärme von einem äußeren Medium auf ein inneres Medium, mit einem Gehäuse (20) und mit einer darin angeordneten wendelförmigen Rohranordnung (30), die von wenigstens einem Rohr (31) gebildet wird, das umfangsseitig mit Rippen (40) versehen ist, wobei das äußere Medium innerhalb des Gehäuses (20) um das Rohr (31) herum und das innere Medium innerhalb des Rohres (31) geführt ist, **dadurch gekennzeichnet,**
a) **dass** die Rohranordnung (30) in einen Primärabschnitt (P) und einen Sekundärabschnitt (S) unterteilt ist, wobei der Primärabschnitt (P) und der Sekundärabschnitt (S) eine gemeinsame Mittelachse (A) aufweisen,
b) **dass** wenigstens zwei Segmente (42) jeder Rippe (40) entlang je einer Linie (L) aus der Rippenebene heraus abgekantet sind, wobei die Linien (L) radial zur Achse (A) und/oder parallel zur Strömungsrichtung (R) des äußeren Mediums verlaufen, und
c) **dass** am Außenumfang und/oder am Innenumfang der wendelförmigen Rohranordnung (30) zumindest abschnittsweise wenigstens ein Leitblech (50) angeordnet ist.

2. Wärmetauscher nach Anspruch 1, **dadurch gekennzeichnet, dass** der Primärabschnitt (P) und der Sekundärabschnitt (S) der Rohranordnung (30) entlang der Achse (A) hintereinander angeordnet sind.

3. Wärmetauscher nach Anspruch 1 oder 2, **dadurch gekennzeichnet, dass** zwischen dem Primärabschnitt (P) und dem Sekundärabschnitt (S) eine Wandung (28) angeordnet ist, wobei das Rohr (31) durch die Wandung (28) hindurchgeführt ist.

4. Wärmetauscher nach einem der Ansprüche 1 bis 3, **dadurch gekennzeichnet, dass** die Rohranordnung (30) von zwei parallel nebeneinander angeordneten Rohren (31) gebildet ist.

5. Wärmetauscher nach Anspruch 1, **dadurch gekennzeichnet, dass** der Primärabschnitt (P) und der Sekundärabschnitt (S) der Rohranordnung (30) koaxial zueinander und zur Achse (A) angeordnet sind.

6. Wärmetauscher nach Anspruch 5, **dadurch gekennzeichnet, dass** der Sekundärabschnitt (S) den Primärabschnitt (P) umschließt.

7. Wärmetauscher nach einem der Ansprüche 1 bis 6, **dadurch gekennzeichnet, dass** die Rohrwindungen des Primärabschnitts (P) und die Rohrwindungen des Sekundärabschnitts (S) in Richtung der Achse (A) versetzt angeordnet sind.

8. Wärmetauscher nach einem der Ansprüche 1 bis 7, **dadurch gekennzeichnet, dass** der Primärabschnitt (P) und der Sekundärabschnitt (S) der Rohranordnung (30) von zwei separaten Rohren (31) gebildet ist.

9. Wärmetauscher nach einem der Ansprüche 1 bis 8. **dadurch gekennzeichnet, dass** die Rohrwindungen der Rohranordnung (30) mit ihren Segmenten (42) aneinander anliegen.

10. Wärmetauscher nach einem der Ansprüche 1 bis 9, **dadurch gekennzeichnet, dass** das Gehäuse (20) einen zylinderförmigen Korpus (21) aufweist, der stirnseitig von je einem Deckel (22, 23) verschlossen ist, wobei das Rohr (31) durch wenigstens einen Deckel (22, 23) hindurchgeführt ist

11. Wärmetauscher nach Anspruch 10, **dadurch gekennzeichnet, dass** das Rohr (31) von dem Deckel (22, 23) in seiner Lage fixiert wird.

12. Wärmetauscher nach Anspruch 10 oder 11, **dadurch gekennzeichnet, dass** jeder Deckel (22, 23) wenigstens eine Isolationsschicht (24) trägt.

13. Wärmetauscher nach Anspruch 12, **dadurch gekennzeichnet, dass** das Rohr (31) zumindest abschnittsweise in der Isolationsschicht (24) eingebettet ist.

14. Wärmetauscher nach einem der Ansprüche 10 bis 13, **dadurch gekennzeichnet, dass** in dem Deckel (22) eine Öffnung (25) zur Aufnahme eines Brenners ausgebildet ist, wobei die Öffnung (25) eine trichterförmige oder kegelförmige Wandung (26) aufweist.

15. Wärmetauscher nach einem der Ansprüche 10 bis 14, **dadurch gekennzeichnet, dass** der zylinderförmige Korpus (21) mit einem Auslass (12) für das äußere Medium versehen ist.

16. Wärmetauscher nach einem der Ansprüche 10 bis 15, **dadurch gekennzeichnet, dass** der zylinderförmige Korpus (21) mit einem Kondensataustritt (14) versehen ist.

17. Wärmetauscher nach Anspruch 16, **dadurch gekennzeichnet, dass** der Auslass (12) und der Kondensataustritt (14) gegenüberliegend angeordnet sind.

18. Wärmetauscher nach einem der Ansprüche 1 bis 17, **dadurch gekennzeichnet, dass** die wendelförmige Rohranordnung (30) exzentrisch im Gehäuse (20) bzw. im Korpus (21) angeordnet ist.

19. Wärmetauscher nach Anspruch 18, **dadurch gekennzeichnet, dass** die Spaltweite (a) zwischen der Rohranordnung (30) und der Oberseite des Gehäuses (20) größer ist als die Spaltweite (b) zwischen der Rohranordnung (30) und der Unterseite des Gehäuses (20).

20. Wärmetauscher nach einem der Ansprüche 1 bis 19, **dadurch gekennzeichnet, dass** die Anzahl der Rippen (40) auf dem Rohr (31) im Sekundärabschnitt (S) größer ist als die Anzahl der Rippen (40) auf dem Rohr (31) im Primärabschnitt (P).

21. Wärmetauscher nach einem der Ansprüche 1 bis 20, **dadurch gekennzeichnet, dass** der Abstand der Rippen (40) in Längsausdehnung des Rohrs (31) im Sekundärabschnitt (S) kleiner ist als im Primärabschnitt (P).

22. Wärmetauscher nach einem der Ansprüche 1 bis 21, **dadurch gekennzeichnet, dass** die von den Rippen (40) gebildete Kontaktfläche mit dem äußeren Medium im Sekundärabschnitt (S) größer ist als im Primärabschnitt (P).

23. Wärmetauscher nach einem der Ansprüche 1 bis 22, **dadurch gekennzeichnet, dass** das Leitblech (50) wendelförmig ausgebildet ist und zumindest abschnittsweise zwei benachbarte Rohre (31) überdeckt.

24. Wärmetauscher nach einem der Ansprüche 1 bis 23, **dadurch gekennzeichnet, dass** das Leitblech (50) im Querschnitt V-förmig ausgebildet ist.

25. Wärmetauscher nach einem der Ansprüche 1 bis 24, **dadurch gekennzeichnet, dass** das Leitblech (50) auf den Außenkanten der Rippen (40) aufliegt.

26. Wärmetauscher nach einem der Ansprüche 1 bis 25, **dadurch gekennzeichnet, dass** das Leitblech (50) aus einem federelastischen Material gefertigt ist.

27. Wärmetauscher nach einem der Ansprüche 1 bis 26. **dadurch gekennzeichnet, dass** das Leitblech (50) in seinem Anfangsbereich und seinem Endbereich an den Rippen (40) fixiert ist.
